(19) Europäisches Patentamt
European Patent Office
Office européen des brevets

(11) Publication number: 0 160 159 B1

# (12) EUROPEAN PATENT SPECIFICATION

(45) Date of publication of patent specification: 19.04.89

(51) Int. Cl.[4]: G 02 F 1/133 // C08L81/06, C08G59/50

(21) Application number: 85100054.7

(22) Date of filing: 02.01.85

## (54) Electrically conductive transparent substrate for a liquid crystal display panel.

(30) Priority: 19.04.84 JP 79699/84

(43) Date of publication of application: 06.11.85 Bulletin 85/45

(45) Publication of the grant of the patent: 19.04.89 Bulletin 89/16

(84) Designated Contracting States: DE FR GB

(56) References cited:
DE-A-3 127 346

PATENT ABSTRACTS OF JAPAN, unexamined applications, P field, vol. 6, no. 70, May 6 1982

THE PATENT OFFICE JAPANESE GOVERNMENT page 163 P 113

PATENT ABSTRACTS OF JAPAN, unexamined applications, P field, vol. 4, no. 47, April 11 1980

THE PATENT OFFICE JAPANESE GOVERNMENT page 17 P 6

(73) Proprietor: NISSAN CHEMICAL INDUSTRIES LTD.
3-7-1, Kanda Nishiki-cho
Chiyoda-ku Tokyo (JP)

(72) Inventor: Shirakawa, Masayoshi Nissan Chemical Ind. Ltd.
Kobunshi Kenkyusho 11-1, Goi-Minami-Kaigan
Ichihara-shi Chiba-ken (JP)
Inventor: Takaishi, Kunio Nissan Chemical Ind. Ltd.
Kobunshi Kenkyusho 11-1, Goi-Minami-Kaigan
Ichihara-shi Chiba-ken (JP)
Inventor: Kobayashi, Takashi Nissan Chemical Ind. Ltd.
Kobunshi Kenkyusho 11-1, Goi-Minami-Kaigan
Ichihara-shi Chiba-ken (JP)

(74) Representative: Wächtershäuser, Günter, Dr.
Tal 29
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 160 159 B1

**Description**

The present invention relates to an electrically conductive transparent substrate for a liquid crystal display panel according to the preamble of the claim.

An electrically conductive transparent substrate of this type has been disclosed in DE—A—31 27 346.

In a so-called twist nematic liquid crystal display panel, a liquid crystal is placed at the center and is sandwiched between a pair of laminated structures each comprising an aligning layer, an electrically conductive substrate and a polarizing plate, and a reflector is provided, as the case requires. Such a display panel is used in various fields, for example, as display panels for electric calculators, watches or other meters.

In such a panel, the electrically conductive transparent substrate which contacts the liquid crystal via the aligning layer, used to be made of glass. However, glass was found to have various drawbacks, particularly when it is desired to make the liquid crystal display panel thin and of a light weight. One of the disadvantages is that because of the limitations of the mechanical strength of thin glass and the difficulty of manufacturing thin glass, there is a limit in making the panel thin, and the limit in the reduction of the glass thickness is about 0.5 mm at best. Besides, when the panel is made thin, its impact strength remarkably decreases, and it is possible that the panel receives fatal damage in its display function. Furthermore, there is an additional drawback in making glass thin such that the production can not be conducted continuously, i.e. it is impossible to obtain an elongate thin sheet material.

In order to overcome such drawbacks inherent to glass, an attention has been drawn to the use of synthetic resins for the substrate. At least the problems involved in making the panel thin can be solved almost completely by using synthetic resins instead of glass. However, if a synthetic resin is used for a substrate, there will be the following problems which were not observed in the case of glass.

Firstly, the synthetic resin must be durable against organic reagents such as isopropyl alcohol, trichloroethylene, ethyl cellosolve, n-methylpyrrolidone and dimethylformamide, since it is brought into contact with such organic reagents during the washing of parts of the liquid crystal panel, during the patterning of the electrodes or during the formation of aligning layers. Further, it must be chemically adequately stable also against the liquid crystal itself. Secondly, it must have adequate heat resistance, since it is subjected to a high temperature atmosphere during the preparation of an electrically conductive transparent substrate or during the process for the formation of aligning layers, and therefore the selection of a synthetic resin for the substrate is thereby restricted. Thirdly, the substrate itself tends to be oriented, and when the substrate is placed between crossed polarizers, an interference color is likely to form on the substrate. These are the major drawbacks.

For the selection of the material for the substrate for practical use, the synthetic resin must firstly be a amorphous polymer. In the case of a crystalline polymer, crystalline orientation is likely to take place, and when such a crystalline polymer is applied to a liquid crystal display panel, it is likely that coloring will result.

For the selection of the material for the substrate, it is also important to take the thermal deformation resistance into accounts. The substrate will be heated, for instance, during the process for the formation of an electrically conductive transparent layer on the substrate, during the process for the formation of an aligning layer on the electrically conductive transparent layer, or during the formation of a cured coated film of a thermosetting resin as will be mentioned hereinafter, and the material must be durable against the temperature for such heating and yet must be dimensionally stable. Under the circumstances, it is usual that the lower limit for the heat resistance temperature is 120°C.

Particularly suitable for meeting the above-mentioned requirements are polysulfone resins and polyether sulfone resins as pointed out in JP—A—17135/1980.

To use these resins as substrates, it is necessary to form them into films having a thickness of from 20 to 500 µm. The film may be manufactured by a casting method or a melt film-forming method. From the economical viewpoint, the latter is more advantageous.

If the thickness is less than 20 µm, there will be difficulties in the operation for laminating a polarizing plate during the assembling of a liquid crystal display panel or in maintaining a distance between electrodes for the display panel. On the other hand, if the thickness exceeds 500 µm, it will be difficult to wind it up into a continuous roll, and it will be difficult to operate continuously in the forming a cured coating layer of a thermosetting resin as will be described hereinafter. Furthermore, the thickness exceeding 500 µm is against the objective of making the liquid crystal display panel thin.

Then, the substrate is subjected to sputtering, vapour deposition, ion plating or the like to form an electrically conductive transparent layer on the substrate, whereby an electrically conductive transparent substrate is obtainable.

The electrically conductive transparent substrate is then subjected to patterning to form a circuit necessary for a display panel, and then an aligning layer is formed on the surface, whereby a liquid crystal panel is obtained.

The electrically conductive transparent substrate contacts the liquid crystal via the aligning layer. The thickness of the aligning layer is only about 100 nm. Accordingly, it is reasonable to say that from the viewpoint of the chemical resistance, the electrically conductive transparent substrate is substantially in contact with the liquid crystal, and is susceptible to an influence or damage from the chemical nature of the

liquid crystal. Furthermore, the substrate is susceptible to chemical damage since it is brought in contact with the organic solvents during the process for washing the substrate or during the process for the formation of aligning layers, as mentioned above.

The present inventors have conducted extensive researches to overcome the above-mentioned drawbacks by forming a certain thermosetting coating layer on the substrate, and have made various improvements in the selection of the material and the structure, whereby the present invention has been accomplished.

Namely, the present invention provides an electrically conductive transparent substrate structure for a liquid crystal display panel according to the preamble of the claim which is characterized in that the bisphenol A type epoxy resin has a weight average molecular weight of from 10,000 to 70,000 and the weight ratio of the melamine resin at the time of the reaction is from 5 to 40% based on the total amount of resins.

Now, the present invention will be described in detail with reference to the preferred embodiments.

According to the present invention, an amorphous synthetic resin such as a polysulfone resin or a polyether sulfone resin is used as the substrate, and a cured coating layer of a thermosetting resin is formed on one side or, if necessary, on both sides, of the substrate, to obtain an optically substantially isotropic composite film, whereby the material of the substrate is protected from the contact with the liquid crystal itself, and at the same time, the stability against organic reagents used in the washing operation of the substrate or in the patterning operation, is improved. Basically, the thermosetting resin is required to be chemically stable against the organic reagents and the liquid crystals and to have good heat resistance. Further, it must have adequate affinity to the polysulfone resin or polyether sulfone resin of the substrate to form a stable composite film.

As an additional requirement, like the synthetic resin of the substrate, the thermosetting resin must be durable against deformation, and, in some cases, it is desirable that the thermosetting resin has a surface hardness higher than that of the substrate and thus has better resistance against scratching, whereby the continuous production can be facilitated.

As a method for forming a cured coating layer of the thermosetting resin on the substrate, there may be employed a gravure coating method, a reverse roll coating method or a Meiyer bar coating method. Any method may be employed, but from the industrial point of view, it is desired to employ a method whereby the resin can be cured within 5 minutes. Needless to say, the cured coating layer must be substantially transparent and optically isotropic.

The thermosetting resin to be used in the present invention is composed of an epoxy resin, a melamine resin and, if necessary, a curing accelerator.

The epoxy resin consists of the following basic structure:

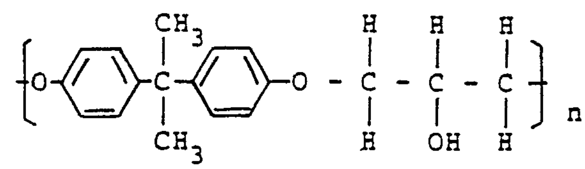

and is not only a so-called bisphenol A type epoxy resin.

The epoxy resin is required to have a weight average molecular weight of from 10,000 to 70,000 as measured by gel permeation chromatography. If the weight average molecular weight is less than 10,000, the cured coating layer tends to be brittle, and will not be suitable for the purpose of the present invention. On the other hand, if the weight average molecular weight exceeds 70,000, there will be difficulties in the process for the formation of the coating layer in view of the restriction for the solvent to be used for dissolving the resin or due to an increase of the viscosity.

The melamine resin which is employed in the present invention is obtainable by reacting melamine with formaldehyde and afterward the alkyl etherification of a part or whole of methylol groups. As the alcohol for the alkyl etherification, there may be employed an alcohol having from 1 to 4 carbon atoms, such as methanol, ethanol, n-propanol, isopropanol, n-butanol or isobutanol.

In the present invention, epoxy resin and the melamine resin are used in combination, whereby the weight ratio of the melamine resin is within a range of from 5 to 40% based on the total amount of the resin mixture. If the amount of the melamine resin exceeds 40%, the cured coating layer tends to be brittle, and if the amount is less than 5%, the curing rate tends to be slow, thus leading to a trouble for the manufacturing process.

In the present invention, a curing accelerator for melamine resins may be incorporated as a catalyst to facilitate the curing. As such a curing accelerator, there may be employed phosphoric acid, p-toluenesulfonic acid, or an alkylsulfonic acid. The curing accelerator is incorporated preferably in an amount of from 0.01 to 2% by weight relative to the solid content of the resin. As an organic solvent which may be used for dissolving these components, there may be employed benzene, toluene, xylene, isopropyl alcohol, butanol, methyl ethyl ketone or ethyl cellosolve.

The thickness of the cured coating layer thus obtained, is preferably within a range of from 2 to 20 µm. If the thickness is less than 2 µm, it is rather difficult to protect the substrate against the liquid crystal or

organic reagents which are employed in the process for washing the substrate or for patterning. On the other hand, if the thickness exceeds 20 μm, there will be difficulties from the viewpoints of operations such as the time required for drying or curing and the surface leveling, and there will be drawbacks that the formed coating layer tends to be brittle and the adhesion to the substrate tends to be poor.

The cured coating layer formed by the present invention, exhibited good heat resistance when exposed to a high temperature atmosphere in the subsequent processes for the formation of aligning layers and the formation of electrically conductive transparent layers. Thus, the electrically conductive transparent substrate obtained by the present invention, was found to exhibit the desired performance as an element constituting a liquid crystal display panel.

Now, the present invention will be described in further detail with reference to Examples. However, it should be understood that the present invention is by no means restricted by these specific Examples.

In the Examples, the cured coating layers were evaluated as follows.

Organic solvent resistance:

The cured coating layers were subjected to a spot test with dimethylformamide at 23°C, whereby the film surface was examined by naked eyes and evaluated in accordance with the following standards.

◎: No change of the surface was observed within 24 hours.
O: No change of the surface was observed within 1 hour.
X: A change of the surface was observed within 1 hour.

Crystal liquid resistance:

The coating layers were subjected to a spot test with GR—63 of Chisso Corp. at 80°C, whereby the changes in the outer appearance, the weight and the thickness of each coating film were observed and evaluated in accordance with the following standards.

◎: No change was observed within 1000 hours.
O: No change was observed within 100 hours.
X: A change was observed within 100 hours.

Bending test:

The tests were conducted in accordance with the bending resistance test of JIS K—5400.

◎: No crack was formed by a 180° bending test with a diameter of 2 mm.
O: No crack was formed by a 180° bending test with a diameter of 3 mm.
X: No crack was formed by a 180° bending test with a diameter of 4 mm.

Example 1

A polysulfone resin manufactured by Union Carbide Co. was formed into a film having a thickness of 100 μm by a melt film-forming method. On this film, a cured coating layer was formed under the following conditions.

Thermosetting resin composition:

| | |
|---|---|
| Epototo YD 7019 (a bisphenol A type epoxy resin manufactured by Toto Kasei K.K., weight average molecular weight: 13,000) | 21% by weight |
| Yuban 20 SE—60 (n-butylated melamine resin, manufactured by Mitsui Toatsu K.K.) | 9% by weight |
| Phosphoric acid | 0.3% by weight |
| Solvent (xylene/n-butanol: 1/1 by weight) | rest |

The above mixture was coated by means of a Meiyer bar coater in an amount to form a cured coating layer having a thickness of 5 μm, and heated at 160°C for 3 minutes in a hot air circulating heating oven, whereby a cured coating layer was formed.

Examples 2 and 3

Cured coating layers were formed under the same conditions as in Example 1 except that the mixing ratios of the epoxy resin and the melamine resin were changed as follows:

| | | |
|---|---|---|
| (Example 2) | Epototo YD 7019 | 24% by weight |
| | Yuban 20 SE—60 | 6% by weight |
| (Example 3) | Epototo YD 7019 | 18% by weight |
| | Yuban 20 SE—60 | 12% by weight |

Comparative Example 1

A coating layer was formed under the same conditions as in Example 1 except that the epoxy resin was used in an amount of 30% by weight and no melamine resin was added.

Comparative Example 2

A coating layer was formed under the same conditions as in Example 1 except that the epoxy resin was used in an amount of 9% by weight, and the melamine resin was used in an amount of 21% by weight.

Comparative Example 3

A coating layer was formed in the same manner as in Example 1 except that an epoxy resin having a low molecular weight was used as the epoxy resin, and the composition of the thermosetting resin composition was changed as follows:

Thermosetting resin composition:

| | |
|---|---|
| Epototo YD 7017 (an epoxy resin manufactured by Toto Kasei K.K., weight average molecular weight: 9,000) | 21% by weight |
| Yuban 20 SE—60 (butylated melamine resin manufactured by Mitsui Toatsu K.K.) | 9% by weight |
| Phosphoric acid | 0.3% by weight |
| Solvent (xylene/n-butanol: 1/1 by weight) | rest |

Comparative Examples 4 and 5

Coating layers were formed in the same manner as in Comparative Example 3 except that the mixing ratios of the epoxy resin and the melamine resin in the thermosetting resin composition were changed as follows:

| | |
|---|---|
| (Comparative Example 4) | |
| Epototo YD 7017 | 24% by weight |
| Yuban 20 SE—60 | 6% by weight |
| (Comparative Example 5) | |
| Epototo YD 7017 | 18% by weight |
| Yuban 20 SE—60 | 12% by weight |

The results obtained in Examples 1 to 3 and Comparative Examples 1 to 5 are shown in Table 1.

From the results of group A, it is evident that the weight ratio of the melamine resin to the thermosetting resin is preferably from 5 to 40%.

From the results of group B, it is evident that it is impossible to obtain a satisfactory cured coating layer even when the weight ratio of the melamine resin to the thermosetting resin is within a range of from 5 to 40% if the molecular weight of the epoxy resin is too small.

In each case, the obtained composite coating layers showed no optical anisotropy between crossed polarizers.

TABLE 1

| Group | | Weight average molecular weight of epoxy resin | Weight ratio of melamine resin to thermosetting resin | Organic solvent resistance | Liquid crystal resistance | Bending property |
|---|---|---|---|---|---|---|
| A | Example 1 | 13,000 | 30% | ◎ | ◎ | ◎ |
| | Example 2 | 13,000 | 20% | ○ | ◎ | ◎ |
| | Example 3 | 13,000 | 40% | ◎ | ◎ | ○ |
| | Comparative Example 1 | 13,000 | 0% | X | X | ○ |
| | Comparative Example 2 | 13,000 | 70% | ○ | ○ | X |
| B | Comparative Example 3 | 9,000 | 30% | ○ | ○ | X |
| | Comparative Example 4 | 9,000 | 20% | X | X | ○ |
| | Comparative Example 5 | 9,000 | 40% | ○ | ◎ | X |

**Claim**

1. An electrically conductive transparent-substrate structure for a liquid crystal display panel, which comprises a substrate of an amorphous synthetic resin selected from a polysulfone or a polyethersulfone, a cured coating layer of a thermosetting resin formed on at least one side of the substrate, the thermosetting resin being a reaction product of a bisphenol A type epoxy resin with a melamine resin, and an electrically conductive transparent layer formed on one side of the coating layer, characterized in that the bisphenol A type epoxy resin has a weight average molecular weight of from 10,000 to 70,000 and the weight ratio of the melamine resin at the time of the reaction is from 5 to 40% based on the total amount of the resins.

**Patentanspruch**

1. Elektrisch leitfähige, transparente Substratstruktur für ein Flüssigkristall-Anzeigepaneel, umfassend ein Substrat aus einem amorphen synthetischen Harz, ausgewählt aus einem Polysulfon oder einem Polyethersulfon, eine gehärtete Beschichtung aus einem wärmehärtenden Harz, die auf mindestens einer Seite des Substrats ausgebildet ist, wobei das wärmehärtende Harz ein Reaktionsprodukt von einem Bisphenol-A-Typ-Epoxyharz mit einem Melaminharz ist, und eine elektrisch leitfähige, transparente Schicht, die auf einer Seite der Beschichtung ausgebildet ist, dadurch gekennzeichnet, daß das Bisphenol-A-Typ-Epoxyharz ein Gewichtsmittel-Molekulargewicht von 10.000 bis 70.000 aufweist und das Gewichtsverhältnis des Melaminharzes zur Zeit der Umsetzung von 5 bis 40%, bezogen auf die Gesamtmenge der Harze, beträgt.

**Revendication**

1. Structure de substrat transparent électriquement conducteur pour panneau d'affichage à cristal liquide, qui comprend on substrat fait d'une résine synthétique amorphe, choisie parmi une polysulfone ou une polyéthersulfone, une couche de revêtement durci d'une résine thermodurcissable formée sur au moins un côté du substrat, la résine thermodurcissable consistant en un produit de réaction d'une résine époxy du type bisphénol A avec une résine de mélamine, et une couche transparente électriquement conductrice formée sur un côté de la couche de revêtement, caractérisée par le fait que la résine époxy de type bishphénol A possède une masse móleculaire moyenne en poids allant de 10,000 à 70,000, et que la proportion pondérale de la résine de mélamine au moment de la réaction va de 5 à 40% sur la base de la quantité totale des résines.